# EUROPEAN PATENT APPLICATION

(11) **EP 3 330 113 A1**
(43) Date of publication of application: **06.06.2018**
(21) Application number: 16830235.4
(22) Date of filing: 04.07.2016
(51) Int. Cl.: B60G 21/073, B60G 11/30, F15B 1/24, F16F 9/32

(54) **SUSPENSION DEVICE AND ACCUMULATOR**

(30) Priority: 27.07.2015 JP 2015147372
(71) Applicant: KYB Corporation, Tokyo 105-6111 (JP)
(72) Inventor: CHIKAMATSU, Satoshi, Tokyo 105-6111 (JP); KAWAKAMI, Hideki, Tokyo 105-6111 (JP)
(74) Representative: MFG Patentanwälte Meyer-Wildhagen Meggle-Freund Gerhard PartG mbB
(86) International application number: PCT/JP2016/069743
(87) International publication number: WO 2017/018130

(57) **Abstract**

Provided is a suspension device capable of improving roll stiffness without deteriorating the durability of a seal and the riding comfort of a vehicle.

A suspension device (1) of the invention includes: a pair of liquid pressure dampers (DL) and (DR); a first passage (P1) which communicates the extension side chamber (EL) with the compression side chamber (CR); a second passage (P2) which communicates the compression side chamber (CL) with the extension side chamber (ER) ; and accumulators (AL) and (AR), in which each of the accumulators (AL) and (AR) includes a casing (10), a first free piston (11) which defines a gas chamber (G) inside the casing (10), and a second free piston (12) which defines a first gas chamber (G1) and a second gas chamber (G2) inside the gas chamber(G), and a pressure receiving area near the first gas chamber (G1) in the second free piston (12) is set to be smaller than a pressure receiving area near the second gas chamber (G2) .

## Description

### Technical Field

The present invention relates to a suspension device and an accumulator.

### Background Art

Hitherto, as a suspension device that suppresses a change in posture of a vehicle, JP 1993-213040 A discloses a structure in which a hydraulic damper is interposed between a vehicle body and each of left and right vehicle wheels, each hydraulic damper includes a cylinder, a piston slidably inserted into the cylinder to define an extension side chamber and a compression side chamber inside the cylinder, and a piston rod connected to the piston, the extension side chamber of one hydraulic damper communicates with the compression side chamber of the other hydraulic damper through a first passage with a damping valve, the compression side chamber of one hydraulic damper communicates with the extension side chamber of the other hydraulic damper through a second passage with a damping valve, and the accumulator is connected in the course of each of the passages through the damping valve.

In the suspension device, when the hydraulic dampers extend and contract in the same phase, the hydraulic fluid becomes excessive or deficient inside the cylinders of both hydraulic dampers by the volumes of the piston rods advancing and retracting into and from the cylinders and thus the accumulators absorb the excessive hydraulic fluid and supply the hydraulic fluid by the deficient amount. On the contrary, when the hydraulic dampers extend and contract in the opposite phases, the amount of the hydraulic fluid flowing out of the cylinder becomes larger than that of a case where the hydraulic dampers extend and contract in the same phase and thus the amount of the hydraulic fluid absorbed or supplied into the cylinders by the accumulators increases.

Thus, when the hydraulic dampers extend and contract in the opposite phases, a change in volume of the gas chamber inside each accumulator increases compared to a case where the hydraulic dampers extend and contract in the same phase. Accordingly, a gas spring reactive force of each accumulator increases and the amount of the hydraulic fluid passing through each damping valve increases. As a result, each hydraulic damper exerts a large damping force to suppress the rolling of the vehicle body. Meanwhile, when the hydraulic dampers extend and contract in the same phase, the amount of the hydraulic fluid flowing into or out of each accumulator decreases. Accordingly, the gas spring reactive force of each accumulator decreases and the amount of the hydraulic fluid passing through each damping valve decreases. As a result, when the hydraulic dampers extend and contract in the same phase, the damping force generated in each hydraulic damper decreases compared to a case where the hydraulic dampers extend and contract in the opposite phases . Accordingly, it is possible to prevent a problem in which a vibration input to the vehicle wheel due to the unevenness on the road is transmitted to the vehicle body.

### Summary of the Invention

In order to improve the roll stiffness of the vehicle by the suspension device, a pressure inside the accumulator may be set to be high. In order to increase the pressure inside the accumulator, specifically, a sealing pressure of a gas charged into the gas chamber may be increased or the volume of the gas chamber may be decreased. In this way, the roll stiffness increases and the gas spring reactive force of the accumulator increases. Accordingly, since the damping force increases when the hydraulic dampers extend and contract in the same phase or only one of them extends and contracts or when the oil temperature increases, the riding comfort in the vehicle deteriorates and the vehicle height variation increases.

Further, when the sealing pressure of the gas charged into the gas chamber is increased or the volume of the gas chamber is decreased, a high pressure acts on the seal of the hydraulic damper and the free piston in the case of a structure in which the gas chamber and the liquid chamber of the accumulator are defined by the free piston. As a result, there is a possibility that the deterioration of the seal therebetween is accelerated and the durability is impaired.

Here, the invention is contrived to solve the above-described problems, an object of the invention is to provide a suspension device capable of improving roll stiffness without deteriorating the durability of a seal and the riding comfort of a vehicle, and another object of the invention is to provide an accumulator in which characteristics of a gas spring reactive force with respect to an inflow liquid amount change.

In order to attain the above-described object, a suspension device of the invention includes: a pair of liquid pressure dampers; a first passage which communicates an extension side chamber of one liquid pressure damper with a compression side chamber of the other liquid pressure damper; a second passage which communicates a compression side chamber of one liquid pressure damper with an extension side chamber of the other liquid pressure damper; and an accumulator which is provided in the course of each of the first passage and the second passage, in which each accumulator includes a hollow casing, a first free piston which is slidably inserted into the casing to define a liquid chamber and a gas chamber inside the casing, and a second free piston which is slidably inserted into the casing to define afirst gas chamber and a second gas chamber inside the gas chamber, and a pressure receiving area near the first gas chamber in the second free piston is set to be smaller than a pressure receiving area near the second gas chamber.

### Brief Description of Drawings

Fig. 1 is a circuit diagram of a suspension device according to an embodiment.
Fig. 2 is a diagram illustrating a variation in a damping valve provided in the suspension device according to the embodiment.
Fig. 3 is an enlarged longitudinal sectional view of an accumulator.
Fig. 4 is a diagram illustrating characteristics of a gas spring reactive force with respect to a liquid inflow amount of an accumulator.
Fig. 5 is an enlarged longitudinal sectional view of another accumulator.

### Description of Embodiments

Hereinafter, embodiments of the invention will be described with reference to the drawings. A suspension device 1 of an embodiment of the invention includes a pair of liquid pressure dampers DL and DR, a first passage P1 which connects an extension side chamber EL of one liquid pressure damper DL and a compression side chamber CR of the other liquid pressure damper DR, a second passage P2 which connects a compression side chamber CL of one liquid pressure damper DL and an extension side chamber ER of the other liquid pressure damper DR, an accumulator AL which is connected to the first passage P1, and an accumulator AR which is connected to the second passage P2 and is used so that the liquid pressure damper DL is interposed between a vehicle body and a left front wheel axle and the liquid pressure damper DR is interposed between the vehicle body and a right front wheel axle of, for example, a four-wheeled vehicle.

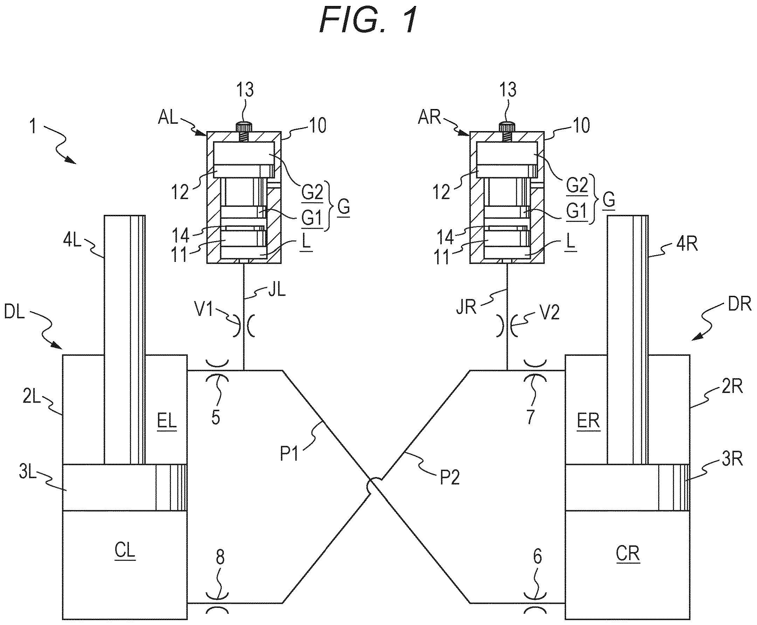

First, the liquid pressure dampers DL and DR include, as illustrated in Fig. 1, cylindrical cylinders 2L and 2R, pistons 3L and 3R which are slidably inserted into the cylinders 2L and 2R to define the inner spaces of the cylinders 2L and 2R into extension side chambers EL and ER and compression side chambers CL and CR, and piston rods 4L and 4R of which one ends are connected to the pistons 3L and 3R and the cylinders 2L and 2R are filled with, for example, hydraulic fluid corresponding to a hydraulic liquid in an oil-tight state. In addition, a liquid such as water, an aqueous solution, an electrorheological fluid, and a magnetorheological fluid can be also used as the hydraulic liquid in addition to the hydraulic fluid. Further, in the above description, the liquid pressure dampers DL and DR are so-called single rod type dampers, but may be a double rod type in which the piston rods extend at both sides of the pistons 3L and 3R.

Then, the liquid pressure dampers DL and DR are respectively connected to the first passage P1 and the second passage P2. Specifically, the first passage P1 connects the extension side chamber EL of one liquid pressure damper DL and the compression side chamber CR of the other liquid pressure damper DR and the second passage P2 at the other side connects the compression side chamber CL of one liquid pressure damper DL and the extension side chamber ER of the other liquid pressure damper DR. That is, the first passage P1 and the second passage P2 connect crosswise the extension side chambers EL and ER and the compression side chambers CL and CR of the pair of liquid pressure dampers DL and DR.

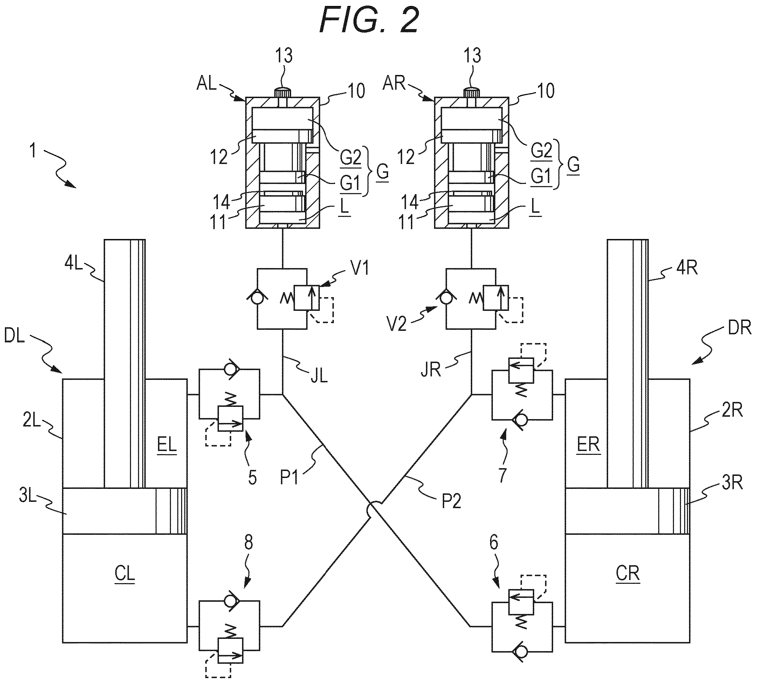

Further, in this case, the first passage P1 is provided with damping valves 5 and 6 and the second passage P2 is also provided with damping valves 7 and 8. Thus, the flow of the hydraulic fluid passing through the damping valves 5, 6, 7, and 8 gets a resistance when the hydraulic fluid is extruded from the inside of the cylinders 2L and 2R of the liquid pressure dampers DL and DR into the first passage P1 and the second passage P2 or the hydraulic fluid is supplied into the cylinders 2L and 2R. In addition, as illustrated in Fig. 1, the damping valves 5, 6, 7, and 8 are constricted to give a resistance to the bidirectional flow of the hydraulic fluid, but may be choked. Further, as illustrated in Fig. 2, the damping valves 5, 6, 7, and 8 may be constricted, may have a configuration in which a one-way valve and a check valve are arranged in parallel, or may be a valve giving a resistance only to the flow of the hydraulic fluid extruded from the inside of the cylinders 2L and 2R. In this case, since the check valve disposed in parallel to the damping valves 5, 6, 7, and 8 is opened, the flow of the hydraulic fluid supplied into the cylinders 2L and 2R does not get a resistance and thus the hydraulic fluid is supplied into the cylinder 2. Further, in the embodiment, the damping valves 5, 6, 7, and 8 are provided, but may be omitted.

One accumulator AL is connected to the first passage P1 through a first junction JL connected between the damping valves 5 and 6 in the course of the first passage P1. The first junction JL is provided with a first valve component V1 which gives a resistance to the flow of the hydraulic fluid from the first passage P1 to the accumulator AL. The first valve component V1 is constricted to give a resistance to the bidirectional flow of the hydraulic fluid, but may be choked. Further, as illustrated in Fig. 2, the first valve component V1 may include a damping valve giving a resistance only to the flow of the hydraulic fluid from the first passage P1 to the accumulator AL and a damping valve disposed in parallel thereto and allowing only the opposite flow. Further, the first valve component V1 may include a damping valve giving a resistance only to the flow of the hydraulic fluid from the first passage P1 to the accumulator AL and a check valve disposed in parallel thereto and allowing only the opposite flow.

The other accumulator AR is connected to the second passage P2 through a second junction JR connected between the damping valves 7 and 8 in the course of the second passage P2. The second junction JR is provided with a second valve component V2 which gives a resistance to the flow of the hydraulic fluid from the second passage P2 to the accumulator AR. The second valve component V2 is constricted to give a resistance to the bidirectional flow of the hydraulic fluid in this case, but may be choked. Further, as illustrated in Fig. 2, the second valve component V2 may include a damping valve giving a resistance only to the flow of the hydraulic fluid from the second passage P2 to the accumulator AR and a damping valve disposed in parallel thereto and allowing only the opposite flow. Further, the second valve component V2 may include a damping valve giving a resistance only to the flow of the hydraulic fluid from the second passage P2 to the accumulator AR and a check valve disposed in parallel thereto and allowing only the opposite flow.

Each of the accumulators AL and AR includes, as illustrated in Figs. 1 to 3, a hollow casing 10, a first free piston 11 which is slidably inserted into the casing 10 to define a liquid chamber L and a gas chamber G inside the casing 10, and a second free piston 12 which is slidably inserted into the casing 10 at a position near the gas chamber G compared to the first free piston 11 to define a first gas chamber G1 and a second gas chamber G2 inside the gas chamber G with respect to the first free piston 11.

The casing 10 has a cylindrical shape, its inner periphery is provided with a small-diameter portion 10a and a large-diameter portion 10b having an inner diameter larger than that of the small-diameter portion 10a, and a step portion 10c is formed at the boundary between the small-diameter portion 10a and the large-diameter portion 10b. Further, the casing 10 is provided with a ventilation hole 10d which is opened from the vicinity of the step portion 10c of the small-diameter portion 10a to communicate with the outside.

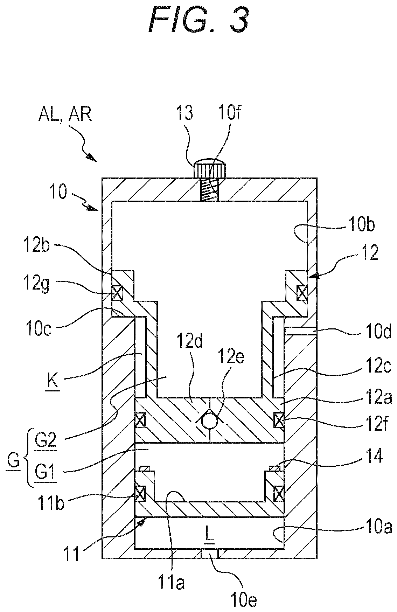

Further, the bottom portion of the lower end of the casing 10 in Fig. 3 is provided with a port 10e communicating with the inside of the small-diameter portion 10a and the top portion of the upper end in Fig. 3 is provided with a gas inlet 10f communicating with the inside of the large-diameter portion 10b. In addition, the gas inlet 10f is attached with a sealing valve 13 which allows the flow of the gas from the outside of the casing 10 into the gas chamber G and prevents the leakage of the gas from the gas chamber G to the outside of the casing 10 in order to conveniently inject the gas.

The first free piston 11 is slidably inserted into the small-diameter portion 10a of the casing 10 and defines a liquid chamber L at a lower side and a gas chamber G at an upper side in Fig. 3 compared to the first free piston 11 inside the casing 10. The ports 10e of the casings 10 of the accumulators AL and AR are respectively connected to the first junction JL and the second junction JR and the liquid chambers L respectively communicate with the first passage P1 and the second passage P2. Further, a concave portion 11a is provided at the first free piston 11 near the gas chamber G, and its outer periphery is attached with a seal ring 11b sliding on the inner peripheral surface of the small-diameter portion 10a of the casing 10, so that the liquid chamber L and the gas chamber G are closely sealed so as not to communicate with each other.

The second free piston 12 is slidably inserted into the large-diameter portion 10b of the casing 10 and defines the first gas chamber G1 and the second gas chamber G2 inside the gas chamber G. The first gas chamber G1 is formed between the first free piston 11 and the second free piston 12 and the second gas chamber G2 is formed at an upper position in Fig. 3 compared to the second free piston 12.

Specifically, the second free piston 12 is formed as a bottomed cylinder and includes a small piston portion 12a which is slidably inserted into the small-diameter portion 10a, a large piston portion 12b which is slidably inserted into the large-diameter portion and has an outer diameter larger than that of the small piston portion 12a, an annular concave portion 12c which is provided at the outer periphery between the small piston portion 12a and the large piston portion 12b, and a check valve 12e which is provided in a bottom portion 12d.

Then, the second free piston 12 defines the first gas chamber G1 with respect to the first free piston 11 inside the small-diameter portion 10a by the insertion of the small piston portion 12a into the small-diameter portion 10a. Further, the second free piston 12 defines the second gas chamber G2 at an upper position in Fig. 3 compared to the large piston portion 12b inside the large-diameter portion 10b by the insertion of the large piston portion 12b into the large-diameter portion 10b. A pressure receiving area of the second free piston 12 receiving a pressure of the first gas chamber G1 is the same as the area of the circle having a diameter corresponding to the outer diameter of the small piston portion 12a and a pressure receiving area of the second free piston 12 receiving a pressure of the second gas chamber G2 is the same as the area of the circle having a diameter corresponding to the outer diameter of the large piston portion 12b. Thus, the pressure receiving area of the second free piston 12 receiving the pressure of the first gas chamber G1 is smaller than the pressure receiving area of the second free piston 12 receiving the pressure of the second gas chamber G2. Further, the check valve 12e allows only the flow of the gas from the second gas chamber G2 to the first gas chamber G1.

Further, a seal ring 12f which slides on the inner peripheral surface of the small-diameter portion 10a is attached to the outer periphery of the small piston portion 12a and a seal ring 12g which slides on the inner peripheral surface of the large-diameter portion 10b is attached to the outer periphery of the large piston portion 12b. Thus, the first gas chamber G1 and the second gas chamber G2 are closely sealed so as not to communicate with each other.

Then, when a gas is injected from the gas inlet 10f while the first free piston 11 and the second free piston 12 are inserted into the casing 10, a gas can be charged into the second gas chamber G2 and a gas can be also charged into the first gas chamber G1 through the check valve 12e.

Further, when the second free piston 12 moves inside the casing 10 downward in Fig. 3 so that the large piston portion 12b contacts the step portion 10c, the further downward movement is regulated. Even when the second free piston 12 moves downward to maximum in this way, the annular concave portion 12c faces the ventilation hole 10d. Further, even if the designed upper limit pressure of the liquid chamber L is established and the second free piston 12 moves upward in Fig. 3 to compress the second gas chamber G2, the annular concave portion 12c faces the ventilation hole 10d. Thus, the annular concave portion 12c normally communicates with the ventilation hole 10d and the inside of the annular concave portion 12c which is a space K formed between the casing 10 and the second free piston 12 is normally opened to the atmosphere through the outside of the casing 10. In this way, since the space K formed between the casing 10 and the second free piston 12 is opened to the atmosphere, even when the space K is compressed and expanded when the second free piston 12 moves inside the casing 10, a pressure inside the space K does not become a high pressure or a negative pressure . Thus, the movement of the second free piston 12 is not disturbed by the compression and the expansion of the space K.

In addition, since the second free piston 12 is provided with the annular concave portion 12c, the annular concave portion 12c is normally opened to the atmosphere by the ventilation hole 10d. However, when the annular concave portion 12c is not provided, the ventilation hole 10d may be opened to the step portion 10c. In this case, since the space K is formed between the large piston portion 12b of the second free piston 12 and the step portion 10c of the casing 10, a negative pressure or a high pressure is not formed in the space K when the ventilation hole 10d is provided as described above and thus the movement of the second free piston 12 is not disturbed.

Further, in the suspension device 1 of the embodiment, an annular cushion 14 is attached to an end near the second free piston 12 in the first free piston 11. Accordingly, even when the first free piston 11 and the second free piston 12 collide with each other, the cushion 14 softens an impact caused by the collision therebetween and thus suppresses a striking sound. In addition, the cushion 14 may be provided at an end near the first free piston 11 in the second free piston 12 and may be formed in an arbitrary shape other than the annular shape.

The suspension device 1 has the above-described configuration and the operation thereof will be described. First, a case in which the liquid pressure dampers DL and DR extend and contract in the same phase, that is, the displacement phases of the pistons 3L and 3R with respect to the cylinders 2L and 2R are the same in the liquid pressure dampers DL and DR will be described.

When the liquid pressure dampers DL and DR extend at the same speed, the volumes of the extension side chambers EL and ER of the liquid pressure dampers DL and DR decrease and the volumes of the compression side chambers CL and CR thereof increase. Then, the hydraulic fluid flowing out of the extension side chamber EL of one liquid pressure damper DL flows into the compression side chamber CR in which the volume of the other liquid pressure damper DR increases through the first passage P1. Further, the hydraulic fluid flowing out of the extension side chamber ER of the other liquid pressure damper DR flows into the compression side chamber CL in which the volume of one liquid pressure damper DL increases through the second passage P2.

However, in the liquid pressure dampers DL and DR, since the volumes increasing in the compression side chambers CL and CR in relation to the volumes decreasing in the extension side chambers EL and ER increase by the volumes in which the piston rods 4L and 4R are retracted from the cylinders 2L and 2R, the hydraulic fluid inside the compression side chambers CL and CR is deficient.

Thus, the hydraulic fluid of the deficient volume is supplied from the other accumulator AR of the compression side chamber CL of one liquid pressure damper DL and from one accumulator AL of the compression side chamber CR of the other liquid pressure damper DR.

In contrast, when the liquid pressure dampers DL and DR are compressed at the same speed, the volumes of the extension side chambers EL and ER of the liquid pressure dampers DL and DR increase and the volumes of the compression side chambers CL and CR thereof decrease. Then, the hydraulic fluid flowing out of the compression side chamber CL of one liquid pressure damper DL flows into the extension side chamber ER in which the volume of the other liquid pressure damper DR increases through the second passage P2. Further, the hydraulic fluid flowing out of the compression side chamber CR of the other liquid pressure damper DR flows into the extension side chamber EL in which the volume of one liquid pressure damper DL increases through the first passage P1.

However, in the liquid pressure dampers DL and DR, since the volumes decreasing in the compression side chambers CL and CR in relation to the volumes increasing in the extension side chambers EL and ER increase by the volumes in which the piston rods 4L and 4R enter the cylinders 2L and 2R, the hydraulic fluid inside the compression side chambers CL and CR becomes excessive .

Thus, the hydraulic fluid of the excessive volume is absorbed to the other accumulator AR of one liquid pressure damper DL and to one accumulator AL of the other liquid pressure damper DR.

Next, a case in which the liquid pressure dampers DL and DR extend and contract in the opposite phases, that is, the displacement phases of the pistons 3L and 3R with respect to the cylinders 2L and 2R are completely opposite in the liquid pressure dampers DL and DR will be described.

When one liquid pressure damper DL extends and the other liquid pressure damper DR is reversely compressed at the same speed as that of one liquid pressure damper DL, the volume of the extension side chamber EL of the liquid pressure damper DL decreases, the volume of the compression side chamber CL increases, the volume of the extension side chamber ER of the liquid pressure damper DR increases, and the volume of the compression side chamber CR decreases.

In this case, all the volumes of the extension side chamber EL of the liquid pressure damper DL and the compression side chamber CR of the other liquid pressure damper DR connected to each other by the first passage P1 decrease, and the hydraulic fluid flowing out of the extension side chamber EL of the liquid pressure damper DL and the compression side chamber CR of the liquid pressure damper DR is absorbed to one accumulator AL.

Further, all the volumes of the compression side chamber CL of the liquid pressure damper DL and the extension side chamber ER of the liquid pressure damper DR connected to each other by the second passage P2 increase, and the hydraulic fluid flowing into the compression side chamber CL of the liquidpressure damper DL and the extension side chamber ER of the liquid pressure damper DR is supplied from the other accumulator AR. The amount of the hydraulic fluid flowing into one accumulator AL and the amount of the hydraulic fluid flowing out of the other accumulator AR increase compared to a case where the liquid pressure dampers DL and DR extend and contract in the same phase.

In contrast, when the liquid pressure dampers DL and DR extend and contract reversely, the hydraulic fluid is supplied from one accumulator AL connected to the first passage P1 to the liquid pressure dampers DL and DR. Further, the hydraulic fluid extruded from the liquid pressure dampers DL and DR is absorbed by the other accumulator AR connected to the second passage P2. Also, the amount of the hydraulic fluid flowing out of one accumulator AL and the amount of the hydraulic fluid flowing into the other accumulator AR increase compared to a case where the liquid pressure dampers DL and DR extend and contract in the same phase.

Here, the damping force of one liquid pressure damper DL is proportional to the differential pressure between the extension side chamber EL and the compression side chamber CL and the damping force of the other liquid pressure damper DR is also proportional to the differential pressure between the extension side chamber ER and the compression side chamber CR.

As described above, when the liquid pressure dampers DL and DR extend and contract in the opposite phases, the amount of the hydraulic fluid exchanged by one accumulator AL, the other accumulator AR, and the liquid pressure dampers DL and DR increases compared to a case where the liquid pressure dampers DL and DR extend and contract in the same phase. Further, the gas spring reactive force of the accumulator which receives the hydraulic fluid among one accumulator AL and the other accumulator AR increases when the hydraulic fluid inflow amount increases and the pressure loss in the first valve component V1 and the second valve component V2 also increases when the passing flow amount increases.

Thus, the differential pressure of the extension side chambers EL and ER and the compression side chambers CL and CR of the liquid pressure damper DL when the liquid pressure dampers DL and DR extend and contract in the opposite phases becomes larger than the differential pressure of the extension side chambers EL and ER and the compression side chambers CL and CR of the liquid pressure damper DL when the liquid pressure dampers DL and DR extend and contract in the same phase. Thus, the damping forces generated by the liquid pressure dampers DL and DR when the liquid pressure dampers DL and DR extend and contract in the opposite phases become larger than the damping forces generated by the liquid pressure dampers DL and DR when the liquid pressure dampers DL and DR extend and contract in the same phase. Thus, according to the suspension device 1, when the vehicle body rolls so that the liquid pressure dampers DL and DR extend and contract in the opposite phases, it is possible to suppress the rolling of the vehicle body by improving the damping forces .

Additionally, in the description above, a case in which the liquid pressure dampers DL and DR extend and contract in the same phase and in the opposite phases and the piston speed is the same has been described, but the damping forces generated by the liquid pressure dampers DL and DR change depending on the amount of the hydraulic fluid supplied and discharged by the accumulators AL and AR. Thus, when only one of the liquid pressure dampers DL and DR extends and contracts or the liquid pressure dampers DL and DR extend and contract while being displaced in the phase from each other, the liquid pressure dampers DL and DR exhibit the damping forces in response to the amount of the hydraulic fluid supplied and discharged by the accumulators AL and AR. Thus, in such a case, the liquidpressure dampers DL and DR generate the intermediate damping forces between a case where the liquid pressure dampers extend and contract in the same phase and a case where the liquid pressure dampers extend and contract in the opposite phases.

As for the arrangement of the liquid pressure dampers DL and DR on the vehicle, a case in which the liquid pressure dampers DL and DR are respectively disposed between the vehicle body and the left and right wheels of the vehicle to suppress the rolling of the vehicle body has been described, but when the liquid pressure dampers DL and DR are respectively disposed between the vehicle body and the front and rear wheels of the vehicle, the damping force increases when the pitching of the vehicle body occurs and thus the pitching of the vehicle body can be suppressed. Further, when the liquid pressure dampers DL and DR are respectively disposed between the vehicle body and the right front wheel and between the vehicle body and the left rear wheel or between the vehicle body and the left front wheel and between the vehicle body and the right rear wheel, the damping force increases when the rolling or the pitching of the vehicle body occurs and thus both the rolling and the pitching of the vehicle body can be suppressed.

Next, the operations of the accumulators AL and AR will be described in detail. In the accumulators AL and AR, characteristics of the gas spring reactive force change in response to the amount of the hydraulic fluid flowing into the liquid chamber L. Hereinafter, a change in characteristic of the gas spring reactive force will be described in detail.

In an initial state where the hydraulic fluid is not supplied from the liquid pressure dampers DL and DR to the liquid chambers L of the accumulators AL and AR, as illustrated in Fig. 3, the second free piston 12 cannot move downward in Fig. 3 since the large piston portion 12b contacts the step portion 10c of the casing 10.

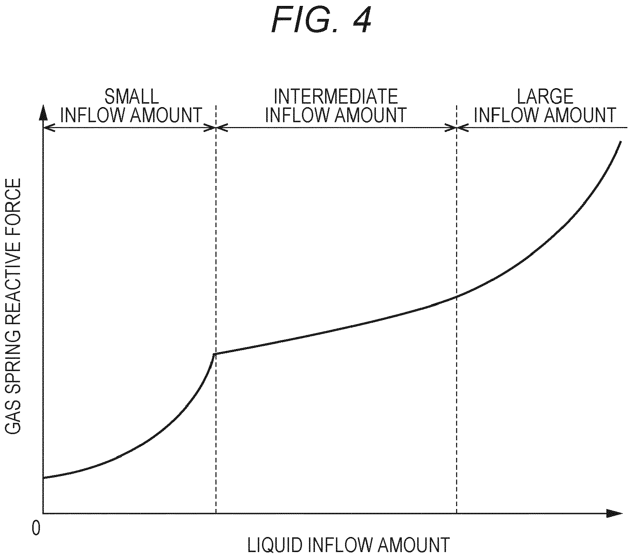

Then, when the hydraulic fluid flows into the liquid chambers L of the accumulators AL and AR, the first free piston 11 is pressed by the inflow hydraulic fluid and is moved upward in Fig. 3 to compress the first gas chamber G1. The second free piston 12 receives a force acting upward in Fig. 3 and exerted by the pressure of the first gas chamber G1 and a force acting downward in Fig. 3 and exerted by the pressure of the second gas chamber G2. Thus, even when the first free piston 11 compresses the first gas chamber G1 so that the pressure of the first gas chamber G1 increases, the second free piston 12 does not move in a state where a force of pressing the second free piston 12 downward in Fig. 3 exceeds the upward force. In this state, the second free piston 12 does not move and only the first free piston 11 moves upward in Fig. 3 so that only the first gas chamber G1 is compressed. That is, since the volume of the second gas chamber G2 does not decrease and only the volume of the first gas chamber G1 is compressed, each of the accumulators AL and AR serves as the accumulator only including the first gas chamber G1 and the liquid chamber L in that only the first gas chamber G1 is effectively operated apparently. Inthisstate, only the first gas chamber G1 contributes to the gas spring reactive force exerted by the accumulators AL and AR and a change in volume of the first gas chamber G1 with respect to the movement of the first free piston 11 is remarkable. For that reason, as illustrated in Fig. 4, since the accumulators AL and AR exhibit the gas spring reactive forces in the characteristics in which the gradient of the amount of the hydraulic fluid flowing into the liquid chamber L increases, the characteristics of the gas spring reactive force rise in proportional to the square of the inflow amount, but when the inflow amount is small, the gas spring reactive force becomes extremely small.

Here, the pressure inside the first gas chamber G1 is indicated by Pg1, the pressure inside the second gas chamber G2 is indicated by Pg2, the pressure receiving area of the second free piston 12 receiving the pressure of the first gas chamber G1 is indicated by A1, and the pressure receiving area of the second free piston 12 receiving the pressure of the second gas chamber G2 is indicated by A2. The above-described state is maintained until the pressure Pg1 of the first gas chamber G1 satisfies the condition of Pg1 ≥ Pg2·A2/A1 before the compression of the first free piston 11.

Meanwhile, when the amount of the hydraulic fluid flowing into the liquid chamber L increases and the movement amount of the first free piston 11 increases so that the first gas chamber G1 is further compressed, the above-described condition is satisfied. Then, a force of pressing the second free piston 12 upward by the pressure of the first gas chamber G1 exceeds a force of pressing the second free piston downward by the pressure of the second gas chamber G2 so that the second free piston 12 also moves upward in Fig. 3. That is, the second free piston 12 also moves upward in Fig. 3 to compress the second gas chamber G2 in accordance with an increase in pressure of the first gas chamber G1 due to the compression of the first gas chamber G1 by the first free piston 11. In this state, the first free piston 11 and the second free piston 12 are separated from each other, but both pistons move upward in Fig. 3 so that both the first gas chamber G1 and the second gas chamber G2 are compressed. Specifically, the second free piston 12 moves upward in Fig. 3 with respect to the movement of the first free piston 11 so as to satisfy the condition of Pg1 = Pg2·A2/A1. In this state, since the first gas chamber G1 and the second gas chamber G2 are compressed, both the first gas chamber G1 and the second gas chamber G2 are effectively operated and contribute to the gas spring reactive forces exerted by the accumulators AL and AR. Thus, when the amount of the hydraulic fluid increases, both the first gas chamber G1 and the second gas chamber G2 are compressed from a state where only the first gas chamber G1 is compressed. For that reason, as illustrated in Fig. 4, the accumulators AL and AR exhibit the gas spring reactive forces in the characteristics in which the gradient with respect to the amount of the hydraulic fluid flowing into the liquid chamber L is small compared to a state where only the first gas chamber G1 is compressed. Thus, the characteristics of the gas spring reactive force in this case are obtained such that the gradient with respect to the inflow amount lies down compared to a case where only the first gas chamber G1 is compressed.

Further, when the amount of the hydraulic fluid flowing into the liquid chamber L increases, the movement amount of the first free piston 11 increases to further compress the first gas chamber G1 so that the first free piston 11 and the second free piston 12 contact to be integrated with each other and move upward in Fig. 3. Then, the first gas chamber G1 is maximally compressed so that the volume becomes the same as the volume of the concave portion 11a and the volume does not decrease any more. In this state, since the first free piston 11 and the second free piston 12 are integrated with each other in a contact state and move inside the casing 10, only the second gas chamber G2 is compressed. That is, since the volume of the first gas chamber G1 does not decrease and only the second gas chamber G2 is compressed, each of the accumulators AL and AR serves as the accumulator only including the second gas chamber G2 and the liquid chamber L in that only the second gas chamber G2 is effectively operated apparently. In this state, only the second gas chamber G2 contributes to the gas spring reactive forces exerted by the accumulators AL and AR. Then, a change in volume of the second gas chamber G2 with respect to the movement of the first free piston 11 is large compared to a case where the first free piston 11 and the second free piston 12 move while being separated from each other. For that reason, as illustrated in Fig. 4, the accumulators AL and AR exhibit the gas spring reactive forces in the characteristics in which the gradient with respect to the amount of the hydraulic fluid flowing into the liquid chamber L is large compared to a state where both the first gas chamber G1 and the second gas chamber G2 are compressed. Thus, the characteristics of the gas spring reactive force in this case are obtained such that the gradient with respect to the inflow amount slightly increases compared to a state where both the first gas chamber G1 and the second gas chamber G2 are compressed. In addition, the characteristics of the gas spring reactive forces of the accumulators AL and AR can be adjusted by the setting of the pressures inside the first gas chamber G1 and the second gas chamber G2, the setting of the pressure receiving areas near the first gas chamber G1 and the second gas chamber G2 in the second free piston 12, and the setting of the volumes of the first gas chamber G1 and the second gas chamber G2.

When the liquid pressure dampers DL and DR are stopped so that the operations of the accumulators AL and AR also end, the hydraulic fluid which flows into the liquid chamber by the operations of the liquid pressure dampers DL and DR is discharged from the liquid chamber L and the second free piston 12 returns to an initial position in which the large piston portion 12b contacts the step portion 10c of the casing 10. Further, the first free piston 11 also returns to an initial position as illustrated in Fig. 3. When the pressure of the gas sealed inside the first gas chamber G1 becomes lower than the initial setting pressure and the pressure of the second gas chamber G2 due to a long-term use or the like, a gas is charged from the second gas chamber G2 to the first gas chamber G1 through the check valve 12e. Accordingly, a decrease in pressure of the first gas chamber G1 is prevented and the above-described operation is maintained for a long period of time.

In the accumulators AL and AR, when the hydraulic fluid inflow amount becomes small, only the first gas chamber G1 is set to be effective. Further, when the inflow amount becomes an intermediate amount, both the first gas chamber G1 and the second gas chamber G2 are set to be effective. Furthermore, when the inflow amount becomes large, only the second gas chamber G2 is set to be effective. In an area in which only the first gas chamber G1 is effective and the amount of the hydraulic fluid to the liquid chamber L is small, the characteristics of the gas spring reactive forces exerted by the accumulators AL and AR are set such that the gas spring reactive forces become extremely small when the inflow amount in this area is small and the gas spring reactive forces largely increase when the amount of the hydraulic fluid to the liquid chamber L increases to a certain degree. In an area in which both the first gas chamber G1 and the second gas chamber G2 are effective and the amount of the hydraulic fluid to the liquid chamber L becomes an intermediate amount, the characteristics of the gas spring reactive forces exerted by the accumulators AL and AR are obtained such that the gas spring reactive force having a gradient decreasing with respect to an increase in amount of the hydraulic fluid increases since the volume of the effective gas chamber G increases. In an area in which only the second gas chamber G2 is effective and the amount of the hydraulic fluid to the liquid chamber L is large, the characteristics of the gas spring reactive forces exerted by the accumulators AL and AR increase compared to a case having an intermediate gradient with respect to an increase in amount of the hydraulic fluid since the volume of the effective gas chamber G decreases. In this way, in the accumulators AL and AR, the effective volume of the gas chamber G apparently changes with respect to the hydraulic fluid inflow amount. For this reason, the characteristics in which the gas spring reactive force with respect to the hydraulic fluid inflow amount increases in proportional to the square of the hydraulic fluid are not obtained and a gas spring reactive force increase rate with respect to the hydraulic fluid inflow amount changes and decreases at a halfway position.

Thus, since the amount of the hydraulic fluid flowing into and out of the accumulators AL and AR is small when the liquid pressure dampers DL and DR extend and contract in the same phase or only one of them extends and contracts, the gas spring reactive forces exerted by the accumulators AL and AR become extremely small as described above. Thus, in the suspension device 1, when the liquid pressure dampers DL and DR extend and contract in the same phase or only one of them extends and contracts, the damping forces exerted by the liquid pressure dampers DL and DR become extremely small. On the contrary, since the amount of the hydraulic fluid flowing into and out of the accumulators AL and AR increases when the liquid pressure dampers DL and DR extend and contract in the opposite phases, the gas spring reactive forces exerted by the accumulators AL and AR increase as described above. Thus, the gas spring reactive forces increase as described above. In the suspension device 1, when the liquid pressure dampers DL and DR extend and contract in the opposite phases, the damping forces exerted by the liquid pressure dampers DL and DR can be further increased.

That is, even when the pressures of the first gas chamber G1 and the second gas chamber G2 are set to exert large gas spring reactive forces at the amount of the hydraulic fluid flowing into the accumulators AL and AR when the liquid pressure dampers DL and DR extend and contract in the opposite phases, the gas spring reactive forces are suppressed to be small at the amount of the hydraulic fluid flowing into the accumulators AL and AR when the liquid pressure dampers DL and DR extend and contract in the same phase or only one of them extends and contracts. When the pressures of the first gas chamber G1 and the second gas chamber G2 are set in this way, the suspension device 1 can exert a large damping force and suppress the rolling of the vehicle when the liquid pressure dampers DL and DR extend and contract in the opposite phases and thus the roll stiffness of the vehicle increases. Even when the pressures of the first gas chamber G1 and the second gas chamber G2 are set in this way, the gas spring reactive forces of the accumulators AL and AR are suppressed to be small when the hydraulic fluid inflow amount is small. Thus, in the suspension device 1, even when the roll stiffness of the vehicle is increased, the damping force does not become excessive and the riding comfort of the vehicle is not deteriorated when the liquid pressure dampers DL and DR extend and contract in the same phase.

Further, even when the temperature of the hydraulic fluid increases and the volume of the hydraulic fluid increases, only the first free piston 11 moves and this movement is absorbed by the first gas chamber G1. Accordingly, a change in gas spring reactive force of each of the accumulators AL and AR becomes small. Thus, since a change in gas spring reactive force of each of the accumulators AL and AR with respect to an increase in temperature of the liquid inside the liquid pressure dampers DL and DR is small, a change in vehicle height may be small.

Further, the pressure receiving area of the second free piston 12 receiving the pressure of the second gas chamber G2 is larger than the pressure receiving area of the first free piston 11 receiving the pressure of the liquid chamber L. Accordingly, even when the roll stiffness is high, the set pressures of the first gas chamber G1 and the second gas chamber G2 can be smaller than those of the accumulators of the conventional suspension device. Thus, since an excessively high pressure does not act on the seal rings 11b, 12f, and 12g provided at the outer peripheries of the first free piston 11 and the second free piston 12 inside the accumulators AL and AR, such deterioration does not occur at an early timing and the durability is not deteriorated.

Further, since the accumulators AL and AR of the suspension device 1 are provided with the check valve 12e allowing only the flow of the gas from the second gas chamber G2 to the first gas chamber G1, a gas can be also simply injected into the first gas chamber G1 when a gas is injected into the second gas chamber G2. Further, when the pressure of the gas sealed in the first gas chamber G1 becomes lower than the pressure of the second gas chamber G2, a gas is charged from the second gas chamber G2 into the first gas chamber G1 through the check valve 12e. Accordingly, since a decrease in pressure of the first gas chamber G1 is prevented, the operations of the accumulators AL and AR and the operation of the suspension device 1 are maintained for a long period of time. In addition, the check valve 12e can be also omitted, the operations of the accumulators AL and AR and the suspension device 1 are not influenced, and the effect of the invention does not disappear. Further, when the check valve 12e is not provided, the set pressure inside the first gas chamber G1 may be different from the set pressure inside the second gas chamber G2.

Further, in the accumulators AL and AR, the casing 10 includes the small-diameter portion 10a and the large-diameter portion 10b and the second free piston 12 includes the small piston portion 12a slidably inserted into the small-diameter portion 10a and the large piston portion 12b slidably inserted into the large-diameter portion 10b. Then, the space K formed between the casing 10 and the second free piston 12 is opened to the atmosphere. In this way, since the space K formed between the casing 10 and the second free piston 12 is opened to the atmosphere, a high pressure or a negative pressure is not formed inside the space K even when the space K is compressed and expanded when the second free piston 12 moves inside the casing 10. Thus, the accumulators AL and AR can be smoothly operated while the movement of the second free piston 12 is not disturbed by the compression and the expansion of the space K. Thus, it is possible to prevent a bad influence in which the damping force increases in a situation in which the damping forces generated by the liquid pressure dampers DL and DR of the suspension device 1 need to be decreased. Even when a gas leaks from the first gas chamber G1 or the second gas chamber G2 to the space K, the space K is opened to the atmosphere. For this reason, a high pressure is not formed inside the space K due to the leakage of the gas into the space K and the movement of the second free piston 12 is not disturbed by the leakage of the gas.

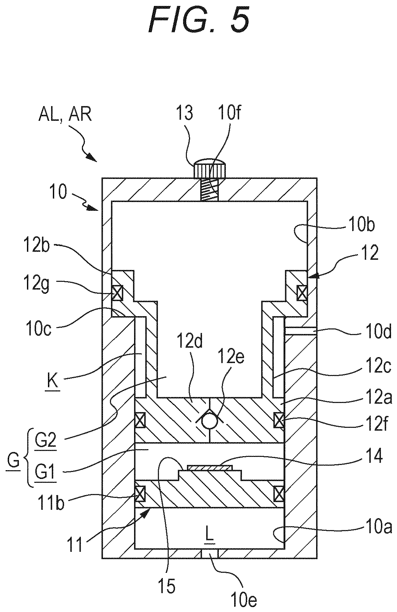

Since the concave portion 11a is provided at the opposing end of the first free piston 11 with respect to the second free piston 12 in the accumulators AL and AR, the first free piston 11 can contact the second free piston 12. In this way, when the amount of the liquid flowing into the liquid chamber L increases, only the second gas chamber G2 becomes effective and the characteristics of the gas spring reactive force are changed at a halfway position so that a gas spring reactive force increase rate with respect to the amount of the liquid flowing into the accumulators AL and AR increases. In addition, the concave portion may be provided at the opposing end of the second free piston 12 with respect to the first free piston 11 and may be provided at both the first free piston 11 and the second free piston 12. Further, one or both of the opposing ends of the first free piston 11 with respect to the second free piston 12 may be provided with a protrusion 15 or the like instead of the concave portion as illustrated in Fig. 5 so that both portions contact each other. The number of the protrusions 15 may be arbitrarily set.

Since the cushion 14 is provided at the opposing end of the first free piston 11 with respect to the second free piston 12 of each of the accumulators AL and AR, the cushion 14 softens an impact caused by the collision therebetween and thus can suppress a striking sound. Further, the cushion may be provided at the opposing end of the second free piston 12 with respect to the first free piston 11 and may be provided at both the first free piston 11 and the second free piston 12.

While the preferred embodiments of the invention have been described in detail, modifications, changes, and replacements can be made without departing from the scope of the claims.

This application claims priority based on Japanese Patent Application No. 2015-147372 filed on July 27, 2015, the contents of which are incorporated herein by reference in its entirety.

## Claims

1. A suspension device comprising:
a pair of liquid pressure dampers each of which includes a cylinder and a piston slidably inserted into the cylinder to define an extension side chamber and a compression side chamber inside the cylinder;
a first passage which communicates the extension side chamber of one liquid pressure damper with the compression side chamber of the other liquid pressure damper;
a second passage which communicates the compression side chamber of one liquid pressure damper with the extension side chamber of the other liquid pressure damper; and
an accumulator which is provided in the course of each of the first passage and the second passage,
wherein each accumulator includes
a hollow casing,
a first free piston which is slidably inserted into the casing to define a liquid chamber and a gas chamber inside the casing, and
a second free piston which is slidably inserted into the casing at a position near the gas chamber compared to the first free piston to define a first gas chamber near the first free piston and a second gas chamber opposite to the first free piston inside the gas chamber, and
a pressure receiving area of receiving a pressure of the first gas chamber in the second free piston is smaller than a pressure receiving area of receiving a pressure of the second gas chamber.

2. The suspension device according to claim 1, further comprising:
a check valve which allows only a flow of a gas from the second gas chamber to the first gas chamber.

3. The suspension device according to claim 1,
wherein the casing includes a small-diameter portion and a large-diameter portion having an inner diameter larger than that of the small-diameter portion,
the first free piston is slidably inserted into the small-diameter portion,
the second free piston includes a small piston portion slidably inserted into the small-diameter portion and a large piston portion slidably inserted into the large-diameter portion, and
a space formed between the casing and the second free piston is opened to an atmosphere.

4. The suspension device according to claim 1,
wherein a concave portion or a protrusion is provided at one or both of opposed ends of the first free piston and the second free piston.

5. The suspension device according to claim 1,
wherein a cushion is provided at one or both of opposed ends of the first free piston and the second free piston.

6. An accumulator comprising:
a hollow casing;
a first free piston which is slidably inserted into the casing to define a liquid chamber and a gas chamber inside the casing; and
a second free piston which is slidably inserted into the casing at a position near the gas chamber compared to the first free piston to define a first gas chamber near the first free piston and a second gas chamber opposite to the first free piston inside the gas chamber,
wherein a pressure receiving area of receiving a pressure of the first gas chamber in the second free piston is smaller than a pressure receiving area of receiving a pressure of the second gas chamber.

7. The accumulator according to claim 6, further comprising:
a check valve which allows only a flow of a gas from the second gas chamber to the first gas chamber.

8. The accumulator according to claim 6,
wherein the casing includes a small-diameter portion and a large-diameter portion having an inner diameter larger than that of the small-diameter portion,
the first free piston is slidably inserted into the small-diameter portion,
the second free piston includes a small piston portion slidably inserted into the small-diameter portion and a large piston portion slidably inserted into the large-diameter portion, and
a space formed between the casing and the second free piston is opened to an atmosphere.

9. The accumulator according to claim 6,
wherein a concave portion or a protrusion is provided at one or both of opposed ends of the first free piston and the second free piston.

10. The accumulator according to claim 6,
wherein a cushion is provided at one or both of opposed ends of the first free piston and the second free piston.
